# FASCICULE DE BREVET EUROPEEN

(11) **EP 3 426 511 B1**
(45) Date de publication et mention de la délivrance du brevet: **25.08.2021**
(21) Numéro de dépôt: 17715218.8
(22) Date de dépôt: 09.03.2017
(51) Int. Cl.: B60H 1/00, F28D 20/02

(54) **BARRIERE THERMIQUE ET ELEMENT INTERIEUR DE STOCKAGE THERMIQUE**
WÄRMEBARRIERE UND INNERES WÄRMESPEICHERELEMENT
THERMAL BARRIER AND INNER HEAT-STORAGE ELEMENT

(30) Priorité: 11.03.2016 FR 1652071
(43) Date de publication de la demande: 16.01.2019
(73) Titulaire: Hutchinson, 75008 Paris (FR)
(72) Inventeur: CHOPARD, Fabrice, 38400 SAINT MARTIN D'HERES (FR); HUILLET, Cédric, 45200 MONTARGIS (FR); GEFFRAY, Fanny, 35000 RENNES (FR)
(74) Mandataire: Ernest Gutmann - Yves Plasseraud S.A.S.
(86) Numéro de dépôt international: PCT/FR2017/050539
(87) Numéro de publication internationale: WO 2017/153692

(56) Documents cités:
- EP-A1- 2 239 159
- WO-A2-2008/011540
- CN-U- 201 961 258
- CN-U- 202 200 918
- GB-A- 2 103 783
- IT-A1- RM20 130 669
- US-A1- 2011 120 040
- US-A1- 2015 316 310

## Description

La présente invention concerne le domaine de la gestion thermique.

Est concerné en particulier un ensemble comprenant un dispositif de gestion thermique pour favoriser, dans un volume intérieur et/ou vis-à-vis d'un élément qui y est disposé, un maintien d'une température dans une plage prédéterminée, alors que le dispositif entoure ledit volume intérieur et est placé dans un environnement extérieur soumis à une température non constante.

Dans ce cadre, sont en particulier concernés des installations frigorifiques, des unités de stockage et de restitution d'une énergie thermique, dont le volume interne est à préserver thermiquement, des véhicules où la température de l'habitacle ou d'une zone annexe de stockage est aussi à préserver, ou encore des éléments de bâtiments situés dans un certain environnement extérieur.

Dans IT-RM2013A000669, est proposé un ensemble comprenant :
- un volume intérieur à gérer thermiquement,
- ledit dispositif disposé autour et placé dans un environnement extérieur soumis à une température non constante, le dispositif comprenant au moins un élément isolant thermique interposé entre le volume intérieur et l'environnement extérieur, et, de l'intérieur, où est situé ledit volume intérieur et/ou l'élément qui y est disposé, vers l'extérieur où est situé ledit environnement extérieur :
   -- un élément intérieur de stockage thermique contenant au moins un matériau MCP ayant une température de changement d'états entre liquide et solide, qui est différente de celles comprises dans ladite plage prédéterminée de températures et/ou sensiblement égale à celle d'un fluide de charge,
   -- et une barrière thermique extérieure contenant au moins un matériau MCP stockant ou cédant de l'énergie thermique par changement d'états entre liquide et solide, et ayant au moins une température de changement d'états comprise entre -50°C et 60°C, pour freiner, par changement d'états, l'action thermique de l'environnement extérieur,
- et des moyens d'apport temporaire dudit fluide de charge, à au moins une température différente de celles dans ladite plage prédéterminée de températures, en échange thermique avec ledit au moins un matériau MCP, pour qu'il stocke alors de l'énergie thermique.

Un problème posé est alors, à fin de gestion thermique dudit volume intérieur et/ou d'un élément qui y est disposé :
- de rechercher une solution qui permette un maintien, dans ledit volume intérieur, d'une température dans une plage prédéterminée,
- sans toutefois de tuyauterie (formant un système de refroidissement et de dissipation thermique) comme dans IT-RM2013A000669, car ceci est une solution complexe et onéreuse.

De fait, on conçoit que pour assurer la gestion thermique d'un volume intérieur et/ou d'un élément qui y est disposé, il puisse être utile tant de pouvoir isoler de l'environnement extérieur ledit volume et/ou son contenu, et même plus finement d'y gérer la température à l'intérieur de marges opérationnelles, que de retarder la propagation d'un flux thermique perturbateur vers ce volume.

A ce sujet :
- les matériaux isolants permettent de limiter les échanges thermiques entre intérieur et extérieur, et,
- un MCP permet, par échange thermique :
   -- s'il agit en barrière thermique de ralentir la propagation d'un front chaud ou froid, en changeant d'état,
   -- s'il agit en moyen de stockage thermique, d'emmagasiner une énergie thermique pour la restituer plus tard, à une structure et/ou à un fluide avec lequel il sera en contact.

C'est dans ce contexte qu'il est ici proposé, dans l'ensemble précité, pour partie commun avec IT-RM2013A000669 :
- que l'élément isolant thermique soit interposé entre la barrière thermique et l'élément intérieur de stockage thermique, et
- qu'apporté temporairement dans ledit volume intérieur par les moyens d'apport temporaire, le fluide de charge y soit en échange thermique avec ledit au moins un matériau à changement de phase.

Par exemple un intérieur de bâtiment à préserver passivement d'une chaleur extérieure excessive, tout en visant une température intérieure de confort, pourra ainsi être moins chaud la journée, par l'effet de la barrière thermique et de l'isolant, et moins froid la nuit, à nouveau par l'effet de l'isolant et par le stockage thermique qui a pu intervenir en journée.

Combiner, comme ci-avant proposé, une barrière thermique et un moyen de stockage thermique a donc tout son sens, ceci d'autant plus, même si ce principe se complique quand il faut gérer thermiquement un espace dans lequel la température peut varier et qui doit être installé dans un environnement difficile, avec des gradients de température pouvant atteindre plusieurs dizaines de °C.

Pour que tant la barrière thermique extérieure que le moyen de stockage thermique intérieur joue efficacement leurs rôles différenciés, il est conseillé que l'élément isolant thermique soit disposé entre l'un et l'autre.

Pour la performance de l'isolation thermique et un rapport efficacité/poids favorable, il est conseillé que le cet élément isolant contienne un matériau poreux, et de préférence nano-poreux.

Et encore à cette fin et/ou à des fins potentiellement mécaniques, il est par ailleurs recommandé que cet élément isolant thermique soit disposé dans une (ou une série d') enveloppe(s) étanche(s), pour définir au moins un panneau isolant sous atmosphère contrôlée, PIV. Ce pourra aussi être utilement le cas pour la barrière thermique extérieure et/ou le moyen de stockage thermique intérieur.

Pour favoriser l'efficacité thermique globale et une fabrication relativement simple et facile à mettre en œuvre, il est conseillé que l'un au moins des éléments intérieur de stockage thermique et barrière thermique extérieure comprenne plusieurs matériaux MCP ayant des températures de changement d'état différentes les unes des autres.

Ainsi on pourra étager le ralentissement extérieur des flux thermiques en jeu et/ou le stockage thermique intérieur.

Ces matériaux MCP pourront être disposés dans plusieurs couches, ou être favorablement dispersés dans une matrice.

Pour la performance globale du moyen de stockage thermique, il est en outre conseillé que la ou l'une au moins des températures de changement d'états température de changement d'états du ou des matériaux MCP de l'élément intérieur de stockage thermique soit :
- supérieure aux températures dans ladite plage prédéterminée de températures à maintenir, si la température du fluide de charge dans ledit volume intérieur est supérieure à ladite plage prédéterminée de températures à maintenir,
- ou bien inférieure aux températures dans ladite plage prédéterminée de températures à maintenir, si la température du fluide de charge dans ledit volume intérieur est inférieure à ladite plage prédéterminée de températures à maintenir.

Ainsi on va pouvoir accumuler une quantité d'énergie dans une paroi interne à un niveau de température supérieure ou égale (en chaud) ou, inférieure ou égale (en froid) à celles de ladite plage prédéterminée de températures à maintenir. Un élément de surface va maintenir plus longtemps le volume à protéger à une telle température supérieure en chaud ou inférieure en froid. On va, au cours du temps, retarder d'autant la variation de température de la paroi interne, ce qui préservera la fonction de stockage thermique en chaud ou celle d'enceinte frigorifique, en froid, dans la plage de température concernée.

En particulier, il sera prévu dans ce cadre que, ledit élément intérieur de stockage thermique contenant plusieurs matériaux MCP, ceux-ci :
- aient des températures de changement d'états, entre liquide et solide, différentes comprises sensiblement entre la température la plus haute dans ladite plage prédéterminée de températures et la température du fluide de charge dans ledit volume intérieur, si la température du fluide de charge dans ledit volume intérieur est inférieure à ladite plage prédéterminée de températures à maintenir,
- ou aient des températures de changement d'états, entre liquide et solide différentes, comprises sensiblement entre la température la plus basse dans ladite plage prédéterminée de températures et la température du fluide de charge dans ledit volume intérieur, si la température du fluide de charge dans ledit volume intérieur est supérieure à ladite plage prédéterminée de températures à maintenir.

De la sorte, les plages de températures propices à l'efficacité thermique de cet élément intérieur de stockage thermique seront optimisées.

Dans certaines applications typiques, c'est en particulier une gestion thermique dans un environnement extérieur chaud (typiquement plus de 25°C à 30°C) qu'il pourrait y avoir à réaliser. Dans ce cadre, il est conseillé:
- que, ledit élément intérieur de stockage thermique contenant plusieurs matériaux MCP, ces derniers aient des températures de changement d'états, entre liquide et solide, différentes comprises sensiblement entre la température la plus haute dans ladite plage prédéterminée de températures et la température du fluide de charge dans ledit volume intérieur, si la température du fluide de charge dans ledit volume intérieur est inférieure à ladite plage prédéterminée de températures à maintenir,
- et que la barrière thermique extérieure contienne plusieurs matériaux MCP ayant des températures de changement d'états supérieures ou égales à celles des matériaux MCP dudit élément intérieur de stockage thermique.

De nouveau les plages de températures propices à l'efficacité thermique de l'élément intérieur de stockage thermique seront ainsi optimisées.

Pour viser aussi une optimisation de l'efficacité thermique de la barrière thermique extérieure, il est recommandé:
- que ledit élément intérieur de stockage thermique contienne plusieurs matériaux MCP ayant des températures de changement d'état différentes, comprises, dans une première plage de températures relativement basses, entre une température basse et une première température (T1) plus élevée,
- que la barrière thermique extérieure contienne plusieurs matériaux MCP ayant des températures de changement d'état différentes comprises, dans une seconde plage de températures supérieure à la première, entre une seconde température (T2) et une température haute plus élevée,
- et que lesdites première et seconde températures (T1,T2) soient identiques, à 5°C près.

Ainsi, on affinera la gestion thermique.

A la connaissance des inventeurs, il n'existe pas au jour du dépôt, d'utilisations industrielles de ce qui précède.

En termes d'applications privilégiées, une première d'entre elles vise donc à une préservation de froid, avec des moyens d'apport du fluide de charge comprenant un groupe de froid.

Ainsi, on gérera avec confiance l'apport du fluide de charge dans un environnement froid.

Même avantage si le volume intérieur comprend un habitacle du véhicule ou une zone annexe de stockage de ce véhicule et que les moyens d'apport du fluide de charge comprennent des moyens de conditionnement d'air d'où sort ledit fluide, et des moyens de mise en communication sélective entre ledit fluide et ledit volume intérieur, en fonction de la température.

Situation encore comparable pour une partie d'un bâtiment construit, situé dans un environnement extérieur et comprenant ledit ensemble où :
- au moins une pièce correspondra alors audit volume intérieur, entouré par une paroi pourvue dudit dispositif de gestion thermique,
- et où les moyens d'apport du fluide de charge comprendront des moyens, tels que des moyens d'aération, tels que portes et fenêtres, pour créer au moins une convection naturelle dans ledit volume intérieur au contact de l'élément intérieur de stockage thermique.

Situation également comparable avec une unité de stockage et de restitution ultérieure d'une énergie thermique, sur un système embarqué, tel un véhicule ou un navire (bateau de croisière, porte-conteneurs...), ladite unité comprenant alors l'ensemble précité, où le fluide de charge correspondra au liquide d'un circuit de circulation forcée de liquide, tel qu'un circuit d'huile, communiquant avec ledit volume intérieur.

Un système de réchauffage d'huile moteur pourrait être ainsi équipé.

Encore un avantage comparable à attendre sur un véhicule comprenant l'ensemble précité, où :
- le volume intérieur correspondra alors à une partie interne d'un moteur de déplacement du véhicule dont une paroi sera dans ce cas au moins localement pourvue dudit dispositif de gestion thermique,
- et les moyens d'apport du fluide de charge comprennent des organes fonctionnels du moteur disposés dans ladite partie interne d'un moteur, tels un turbocompresseur, un collecteur (manifold en anglais), ou encore une pompe à injection.

Un bouclier pourra encapsuler un tel organe moteur (voire un carter) dans lequel transiteront des fluides moteur (huile notamment), un objectif étant de préserver la température de ces organes ou partie de moteur lors d'un stationnement de véhicule, pour permettre un démarrage à partir d'éléments plus chauds qu'il ne le serait sans protection. L'accumulation d'énergie dans la couche de stockage se fera typiquement à la température de surface de ces organes.

En termes maintenant de mode opératoire, il est par ailleurs prévu que la gestion thermique du volume intérieur, ou de l'élément disposé dedans, soit réalisée comme suit :
- on détermine la plage précitée de températures dudit volume intérieur, ou de l'élément disposé dedans, à maintenir,
- on réalise et dispose le dispositif de gestion thermique avec au moins un élément isolant thermique interposé entre le volume intérieur et l'environnement extérieur précité, et, de l'intérieur, où est situé ledit volume intérieur et/ou l'élément qui y est disposé, vers l'extérieur :
   -- un élément intérieur de stockage thermique contenant au moins un matériau MCP ayant une température de changement d'états entre liquide et solide, qui est différente de celles comprises dans ladite plage prédéterminée de températures et/ou sensiblement égale à celle d'un fluide de charge,
   -- et une barrière thermique extérieure contenant au moins un matériau MCP stockant ou cédant de l'énergie thermique par changement d'états entre liquide et solide, et ayant au moins une température de changement d'état comprise entre -50°C et 60°C, pour freiner, par changement d'états, l'action thermique de l'environnement extérieur,
- on place la barrière thermique extérieure du dispositif en échange thermique avec l'environnement extérieur, dont la température est comprise entre -50°C et 60°C, et on laisse alors le(s) matériau(x) MCP stocker ou céder de l'énergie thermique en fonction de ladite température, et on place par ailleurs ledit au moins un matériau MCP de l'élément intérieur de stockage thermique en échange thermique avec le volume intérieur, ou avec l'élément disposé dedans,
- et, à certains moments, on apporte temporairement, dans ledit volume intérieur, ledit fluide de charge, à au moins une température différente de celles dans ladite plage prédéterminée de températures, en échange thermique avec ledit au moins un matériau MCP, pour qu'il stocke alors de l'énergie thermique.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 schématise un conteneur frigorifique à paroi (repérée 11) gérée thermiquement que l'on retrouve en situation et détaillée figure 2 ;
- la figure 3 schématise une alternative à MCP dispersés ;
- les figures 4-7,9 schématisent d'autres applications du dispositif de gestion thermique ici proposé ;
- la figure 8 détaille une possible réalisation du stockeur de la solution de la figure 7 ;
- et les figures 10-11 sont deux possibles réalisations sous forme de panneaux PIV de l'ensemble des matériaux MCP et isolant(s) thermique(s) de la paroi 11 précitée.

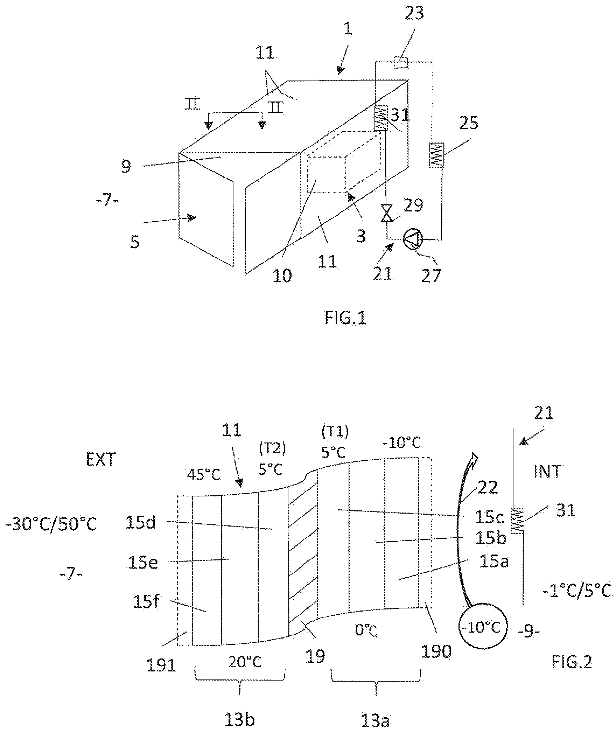

Il est précisé que les figures 2,3,5-8 schématisent uniquement une demi-coupe. Elles doivent être comprises comme impliquant que la paroi 11 schématisée à gauche du volume 9 est à reproduire à droite, voire de tous côtés, avec toujours, de l'intérieur 9 vers l'extérieur 7 : l'élément intérieur 13a de stockage thermique puis la barrière thermique 13b.

A toute fin, il est à cette étape par ailleurs confirmé qu'un matériau à changement de phase - ou MCP ; PCM en anglais - désigne un matériau capable de changer d'état physique, entre liquide et solide, dans une plage de température restreinte comprise entre -50°C et 60°C. Le transfert de chaleur (ou transfert thermique) peut s'opérer par utilisation de sa Chaleur Latente (CL) : le matériau peut alors stocker ou céder de l'énergie par simple changement d'état, tout en conservant une température sensiblement constante, celle du changement d'état.

Le(s) matériau(x) thermiquement isolant(s) associé(s) au(x) MCP pourra(ont) être un isolant « simple » comme de la laine de verre, mais on préfèrera certainement une mousse, par exemple de polyuréthane ou de polyisocyanurate, ou encore plus favorablement un matériau thermiquement isolant poreux, voire nano-poreux, disposé dans une enveloppe sous vide, pour définir au moins un panneau isolant, PIV.

Par « PIV », on entend une structure sous « atmosphère contrôlée », c'est-à-dire soit remplie par un gaz ayant une conductivité thermique inférieure à celle de l'air ambiant (26mW/m.K), soit en « dépression », donc sous une pression inférieure à la pression ambiante (donc < 10⁵Pa). Une pression entre 10⁻²Pa et 10⁴Pa dans l'enceinte pourra en particulier convenir. L'enceinte pourra contenir au moins un matériau isolant thermique a priori poreux (tailles de pores inférieures à 1micron). Dans ce cas, la performance de la gestion thermique à assurer sera encore améliorée, voire le poids d'ensemble diminué par rapport à un autre isolant. Typiquement, les panneaux PIV (panneau isolant sous vide ; VIP en anglais) sont des isolants thermiques où au moins un matériau poreux, par exemple en gel de silice ou poudre d'acide silicique (SiO2), est pressé en plaque et entouré, sous vide d'air partiel, d'une feuille enveloppante étanche aux gaz, par exemple en matière plastique et/ou ou aluminium laminé. Le vide obtenu permet typiquement d'abaisser la conductivité thermique à moins de 0,01/0,020 W/m·K environ dans les conditions d'utilisation. On obtient ainsi une efficacité d'isolation 3 à 10 fois supérieure à celle de matériaux isolants plus classiques.

« Poreux » désigne un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1micron, et préférentiellement encore à 1 à 2x10⁻⁸m (structure quasiment nanoporeuse), pour des questions en particulier de tenue au vieillissement et donc de possible dépression moins forte dans l'enveloppe PIV.

« Déformable » correspond à une structure que l'on peut déformer, par exemple plier, à la main. Et « scellable » concerne une liaison soudable, notamment thermosoudable, voire brasable, avec des feuilles ou des films (plus fins), en particulier.

Ceci précisé, on va dans ce qui suit traiter du cas que quelques exemples privilégiés d'applications du concept inventif présenté ci-avant.

Sur la figure 1 d'abord, il s'agit d'un conteneur frigorifique 1 comprenant un caisson 3 pourvu d'une porte 5 mobile permettant à volonté d'isoler de l'extérieur 7 (EXT) le volume intérieur 9 (INT) clos du caisson ou d'y accéder, porte ouverte.

L'environnement extérieur 7 étant soumis à une température ambiante non constante, un transport d'éléments ou de marchandises 10 thermiquement sensibles, telles que des denrées ou des médicaments, peut être prévu dans le conteneur frigorifique 1.

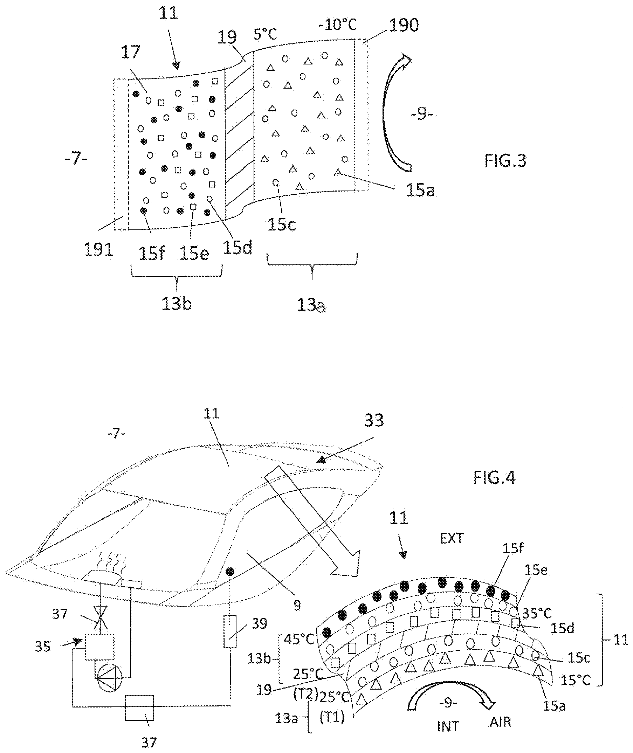

Tout ou partie de la paroi 11 du caisson 3 et/ou de la porte 5 peut être formée comme suit, en référence aux figures 2,3, étant précisé que les couches citées ci-après pourrait être interposées entre deux parois, respectivement extérieure et intérieure, de structure du caisson, telles qu'une paroi métallique et l'autre plastique. Les échanges thermiques avec les zones référencées 7 et 9 pourraient alors se faire au moins partiellement avec ces parois qui définissent alors chacune un dispositif de gestion thermique.

Quoi qu'il en soit, dans les deux cas des figures 2,3, la constitution de ladite paroi 11 va permettre de favoriser le maintien, dans le volume intérieur 9 et/ou vis-à-vis desdits éléments 10, d'une température attendue dans une plage prédéterminée.

Considérons ainsi que l'on vise une température entre -1°C et 5°C dans le volume intérieur 9 et/ou en paroi de l'élément 10 stocké alors dedans.

Pour assurer la gestion thermique attendue, la paroi 11 du caisson et/ou de la porte comprend de l'extérieur 7 (EXT) vers l'intérieur 9 (INT) :
- un élément intérieur 13a de stockage thermique contenant au moins un matériau MCP (ici trois 15a,15b,15c) ayant (au moins pour certains) une température de changement d'états entre liquide et solide, qui est différente de celles comprises dans ladite plage prédéterminée de températures (donc hors de -1°C à 5°C dans l'exemple) et/ou qui est sensiblement égale à celle d'un fluide de charge 22 arrivant temporairement à plus basse température (-10°C dans l'exemple), un écart de températures étant nécessaire pour stocker l'énergie,
- et une barrière thermique extérieure 13b contenant au moins un matériau MCP (ici trois 15d,15e,15f) stockant ou cédant de l'énergie thermique par changement d'états entre liquide et solide, et ayant une ou plusieurs température(s) de changement d'état (Tc) comprise(s) entre -50°C et 60°C,
- et au moins un élément isolant thermique 19.

S'ils sont multiples, les matériaux MCP auront des températures de changement d'état différentes les unes des autres, côté barrière 13b ; idem côté élément de stockage thermique 13a, même s'il pourrait toutefois n'y avoir qu'un matériau MCP par côté (donc éventuellement qu'une seule couche de matériau, telles celles 15a,15d).

Via ses matériaux MCP 15d,15e,15f la barrière thermique extérieure 13b va pouvoir freiner graduellement à l'action thermique de l'environnement extérieur, par changement d'état successifs des MCP, le(s) MCP de l'élément intérieur 13a assurant un stockage thermique par échange thermique avec le volume intérieur et/ou avec l'élément 10, voire avec ladite paroi interne plastique de doublure.

La température de changement d'état du MCP le plus extérieur de la barrière 13b, ici 15f, est supérieure à celle du MCP le plus intérieur par rapport au volume 9, ici le MCP 15d, de même pour l'élément intérieur 13a, comme indiqué sur la figure.

Dans la version de la figure 2, au moins la barrière thermique extérieure 13b, ici également l'élément intérieur 13a de stockage thermique, comprend plusieurs couches de matériaux contenant chacune (au moins) un matériau MCP.

Pour un effet barrière réellement progressif, on pourra prévoir que les matériaux MCP en couches aient des températures de changement d'état qui croissent de la première couche la plus intérieure (MCP 15a ou 15d) à la dernière couche la plus extérieure (MCP 15c ou 15f).

Une solution à MCP dispersés dans une matrice poreuse et souple (à base élastomère notamment) pourrait toutefois être préférée, car plus industrielle, a priori.

D'ailleurs, dans la version de la figure 3, au moins la barrière thermique extérieure 13b comprend plusieurs matériaux MCP 15d,15e,15f, ayant des températures de changement d'état différentes qui sont dispersés dans une matrice 17 commun. Cette solution de dispersion peut s'appliquer au cas de la figure 2, comme à ceux qui suivent et qui correspondant aux schémas des figures 4 et suivantes.

Favorablement, pour bien différencier les modes opératoires des zones 13a et 13b, il est conseillé qu'au moins la couche thermiquement isolante identifiée 19 soit disposée entre la barrière thermique 13b et l'élément intérieur 13a de stockage thermique. Une ou plusieurs couches thermiquement isolantes telles 190,191 pourraient aussi être alors prévues, en face intérieure et/ou extérieure de la paroi 11. Ceci est applicable dans toutes les applications ici envisagées (figures 4 à 11).

Pour expliquer le mode opératoire d'une paroi 11 placée dans le cadre d'un système frigorifique, comme figure 1, prenons l'exemple structurel de la figure 2, étant précisé que le stockage d'énergie thermique par le(s) MCP de l'élément intérieur 13a pourra être réalisé par l'intermédiaire de moyens (ici référencés 21 ou 23) d'apport temporaire, dans ledit volume intérieur 9, d'un fluide de charge 22, à au moins une température différente de celles dans ladite plage prédéterminée de températures.

Dans cette application, il s'agira favorablement d'un groupe de froid 21 prévu pour refroidir temporairement l'atmosphère du volume 9.

De façon traditionnelle et comme illustré figure 1, ce groupe de froid 21 comprend, en circuit fermé, un compresseur 23, un condenseur 25, une pompe 27, une soupape de détente 29 et un évaporateur 31 dans lequel, au sein du volume 9, passe de l'air qui ainsi se refroidir. La production de froid se fait au niveau de l'évaporateur par évaporation du fluide frigorigène (par exemple de l'eau glycolée) qui passe dans le circuit et qui refroidi l'air en captant ses calories.

A l'intérieur, on aura favorablement privilégié que le(s) matériau(x) MCP de l'élément 13a, soi(en)t en échange thermique avec l'atmosphère 9 ou l'élément 10 de telle sorte que la ou chaque température de changement d'états soit inférieure ou égale aux températures dans ladite plage prédéterminée de températures à maintenir (entre -1°C et 5°C dans l'exemple) si, comme dans l'application frigorifique en cause, la température du fluide de charge dans ledit volume intérieur 9 (-15°C dans l'exemple) est inférieure à ladite plage prédéterminée de températures à maintenir.

Ainsi, en faisant fonctionner temporairement ce groupe de froid 21, typiquement la nuit ou juste pendant quelques heures de préférence quand la température extérieure est la moins élevée, on va pouvoir par exemple amener à -15°C la température dans le volume 9, et donc faire cristalliser les MCP 15a,15b,15c dans la situation suivante : Considérons par exemple que les matériaux MCP 15f,15e,15d des couches successives passent d'un état liquide à un état solide (cristallisé) en dessous de respectivement 45°C, 20°C et 5°C, une remontée jusqu'à ces températures respectives les faisant individuellement passer à l'inverse de solide à liquide. Même situations à des températures plus basses, respectivement 5°C, 0°C et -10°C, pour les MCP 15c,15b,15a.

Pour qu'après une liquéfaction le(s) matériau(x) MCP de la barrière thermique extérieure 13b (re)passent d'un état liquide à un état solide (cristallisé), on utilisera l'environnement extérieur.

En phase d'utilisation diurne du caisson, par exemple quand la porte 5 est périodiquement ouverte et fermée alors que le groupe de froid 21 est à l'arrêt, l'énergie thermique libérée par les MCP 15d,15e (car la température dans le volume 9 monte alors vers 0°C par exemple) sert à maintenir cette température entre -1°C et 5°C, ceci passivement, sans apport énergétique issu par exemple d'une remise en fonctionnement du groupe de froid 21.

En même temps que ces stockages et déstockages d'énergie interviennent, la paroi 11 est en outre typiquement soumise aux températures extérieures de l'environnement 7.

Ainsi, disposé autour du volume intérieur 9, en contact avec l'atmosphère extérieure 7, la barrière thermique 13b va subir l'influence d'une température qui évoluera typiquement entre -50°C (pays froids) et 60°C (pays chauds).

Dans l'exemple ci-avant, on s'est placé dans l'hypothèse d'une gestion thermique en pays chauds. En pays froids, c'est contre un froid excessif dans le volume qu'il aurait fallu lutter via les matériaux extérieurs MCP 15d,15e,15f (dont les températures de changements d'états auraient été plus basses) et l'isolant isolant thermique 19.

Supposons que la température nocturne descende à 4°C.

Les matériaux extérieurs MCP 15d,15e,15f sont tous alors dans l'état solide (cristallisé). Ainsi, suite à une chaude journée, ces matériaux se sont rechargés.

En journée la température monte de nouveau jusqu'à dépasser 45°C. Les matériaux extérieurs MCP 15d,15e,15f se liquéfient alors progressivement et ainsi se chargent en énergie calorifique, retardant d'autant l'action de l'isolant thermique 19 et a fortiori l'impact thermique sur le volume 9.

L'isolant thermique 19 sera de préférence un super-isolant, tel qu'un aérogel poreux.

Pour que le stockage potentiel d'énergie dans les matériaux MCP de l'élément intérieur 13a de stockage soient maximal, ces matériaux ont des températures de changement d'états, entre liquide et solide, différentes, comprises sensiblement entre la température du fluide de charge dans ledit volume intérieur (ici -10°C) et la température la plus haute dans ladite plage prédéterminée de températures (ici 5°C), étant rappelé que la température du fluide de charge dans le volume 1 est ici inférieure à ladite plage prédéterminée de températures à maintenir (-1°C à 5°C).

Et pour une efficacité maximale de l'isolant 19, ces mêmes matériaux MCP 15c,15a voire,15b à températures de changement d'état différentes, comprises, dans une première plage de températures relativement basses, entre une température basse (ici -10°C, température inférieure à la plage visée pour le fonctionnel opérationnel du système frigorifique présenté) et une première température plus élevée (T1= 5°C dans l'exemple), tandis que les températures de changement d'état des matériaux MCP de la barrière thermique extérieure 13b sont comprises, dans une seconde plage de températures supérieure à la première, entre une seconde température (T2) et une température haute plus élevée (ici 45°C), avec T1 =T2, à moins de 5°C près.

On peut prévoir un mode de fonctionnement comparable dans un véhicule 33, comprenant, en tant que volume intérieur 9 et comme schématisé figure 4, un habitacle du véhicule ou une zone annexe de stockage, tel qu'un coffre, entouré par une paroi 11 du type précité, c'est-à-dire, avec une barrière thermique extérieure 13b contenant plusieurs matériaux MCP (à nouveau 15d,15e,15f dans l'exemple) et l'élément intérieur 13a de stockage thermique contenant au moins un matériau MCP (à nouveau 15a et 15c dans l'exemple), étant précisé que les constitutions des matériaux à éléments MCP pourraient être différents.

Dans l'exemple la paroi 11 est celle du pavillon de l'habitacle 9 qui borde d'un côté ce dernier, donc l'entoure localement.

Des moyens 35 de conditionnement d'air apportent dans l'habitacle 9 un air qui peut être frais pour cristalliser le(s) matériau(x) MCP 15d et/ou 15e, par exemple un air à 15-18°C si les températures de changement d'état sont respectivement de 16°C et 25°C (T1).

Des moyens 35, telle qu'une vanne, assurent une mise en communication sélective entre le fluide réfrigérant, ici l'air, et le volume 9, en fonction de la température.

La température de confort dans l'habitacle 9 est supposée comprise dans une gamme prédéterminée de 18°C à 25°C. Cette gamme de températures de confort a été entrée en mémoire de l'ordinateur de bord 39 qui commande un fonctionnement automatisé du conditionnement d'air 35, en relation avec un capteur 39 de la température réelle dans l'habitacle 9 (ces derniers moyens existaient dans l'application précédente).

Le stockage thermique de l'élément intérieur 13a peut par exemple être programmé quand le véhicule 33 n'est pas utilisé et/ou quand la climatisation précitée opère. Et les matériaux extérieurs MCP 15d,15e,15f, sont supposés cristallisés après une nuit fraîche (à moins de 25°C, par exemple 15°C). Ils peuvent avoir des températures respectives de changement d'état (entre liquide et solide) de 45°C, 35°C et 25°C, pour être opérants uniquement quand la température extérieure est chaude (plus de 25°C). Ainsi, ils peuvent se liquéfier progressivement quand la température extérieure monte, et ainsi se charger en énergie calorifique, retardant d'autant l'action de l'isolant thermique 19 et a fortiori l'impact thermique sur le réchauffement du volume 9, limitant ainsi le fonctionnement des moyens 35 de conditionnement d'air. On obtient ainsi un conditionnement d'air passif.

Comme noté ci-avant, les matériaux MCP de l'élément intérieur 13a de stockage thermique ont donc des températures de changement d'états inférieures ou égales aux températures dans ladite plage prédéterminée de températures à maintenir (ici 18 à 25°C, donc), la température de l'air frais, conditionné, de charge étant inférieure à celles de cette plage prédéterminée de températures à maintenir.

Et les températures de changement d'états des MCP dans le même élément intérieur 13a sont toutes comprises entre la température du fluide de charge dans ledit volume 9 (ici 15-18°C) et la température la plus haute dans ladite plage prédéterminée de températures (ici 25°C).

Quant aux températures de changement d'états des matériaux MCP de la barrière thermique extérieure 13b, on les aura favorablement choisies supérieures ou égales à celles dudit élément intérieur 13a, avec de nouveau et de préférence T1 = T2, à moins de 5°C près, de part et d'autre de l'isolant 19.

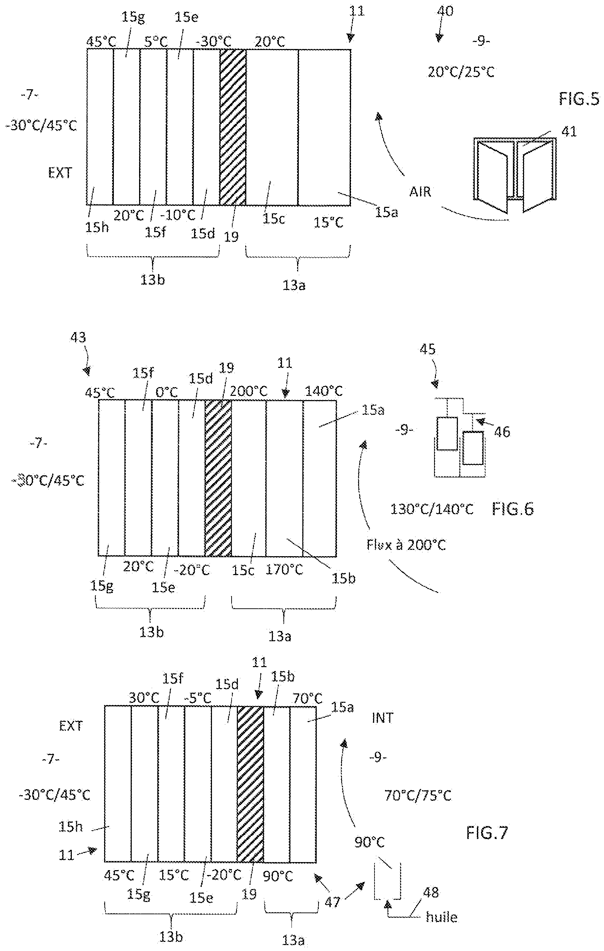

On retrouve un principe opératoire comparable sur l'élément de bâtiment construit 40 (figure 5) situé dans l'environnement extérieur 7 (par exemple une façade orientée au sud, dans un endroit chaud, tel le sud de l'Espagne) et dont le volume intérieur 9 (par exemple une pièce de vie) est ici encore entouré (au moins partiellement) par une paroi 11 du type précité. L'élément intérieur 13a de stockage thermique contient au moins un matériau MCP (à nouveau 15a et,15c dans l'exemple) et la barrière thermique extérieure 13b à matériaux MCP, 15d-15h dans l'exemple. Favorablement, les températures de changement d'état des MCPs de la barrière 13b seront comprises entre -50°C et 45°C, pour un effet barrière tant au froid qu'au chaud, et celle(s) du/des MCPs de l'élément intérieur 13a sera(seront) comprise(s) entre 15°C et 25°C, et de préférence entre 15°C et 20°C.

Ainsi, on pourra obtenir que le volume intérieur 9 tende vers un maintien, sur au moins plusieurs heures, d'une température comprise entre 18 et 25°C, par échange thermique:
- entre le volume intérieur 9 et l'élément intérieur 13b, et
- entre la barrière thermique extérieure 13a et l'environnement extérieur 7.

Compte tenu des dimensions des parois 11 qui sont alors typiquement des murs de pièces, il suffit d'une faible convection naturelle dans le volume 9 et d'un gradient même limité à moins d'un °C entre la température de ce volume et celle de changement d'état au moins du MCP 15a pour que le stockage dans l'élément intérieur 13a intervienne.

Quant aux moyens d'apport du fluide de charge, ils comprennent ici des moyens 41, tels que des moyens d'aération, des portes et fenêtres dans l'exemple, pour créer au moins cette convection naturelle.

L'exemple suivant de la figure 6 schématise le cas d'un véhicule 43 (tel une voiture, un train, un avion ou un navire) où le volume intérieur 9 correspond à une partie interne d'un moteur 45 de déplacement du véhicule dont une paroi 11 telle que précitée est au moins localement pourvue dudit dispositif de gestion thermique. Les moyens d'apport du fluide de charge comprennent des organes 46 fonctionnels du moteur disposés dans ladite partie interne d'un moteur. Il peut s'agir de pistons mus par un vilebrequin et disposés dans, ou en communication fluide avec le volume 9. La température de l'atmosphère dans ce volume 9 est donc influencée par celle des organes fonctionnels 46.

On est dans ce cas dans une situation où le fluide de charge, tel de l'air et/ou de l'huile, présent dans cette partie interne d'un moteur, est à température, par exemple 200°C, supérieure à celle de ladite plage prédéterminée de températures à y maintenir, telle que 130/140°C environ.

On peut en effet souhaiter par exemple qu'une partie d'un bloc-moteur, telle sa paroi extérieure, se maintienne à une telle température même après arrêt du moteur, par exemple pendant 10 à 15 heures, pour favoriser un (re)démarrage à chaud.

Favorablement la/chaque température de changement d'états du ou des matériaux MCP de l'élément intérieur 13a sera alors supérieure ou égale à la (aux) température(s) dans ladite plage prédéterminée de températures à maintenir, 130/140°C dans l'exemple.

Et, les matériaux MCP de cet élément intérieur ont par ailleurs des températures de changement d'états (voir figure 6 : 140/200°C), entre liquide et solide, comprises sensiblement entre la température la plus basse dans ladite plage prédéterminée de températures (130°C) et la température du fluide de charge dans ledit volume intérieur (200°C). Ainsi, la capacité de stockage thermique sera optimisée.

Quant aux matériaux MCP de la barrière thermique extérieure 13b, ils ont ici des températures de changement d'états, entre -20/-50°C et 45°C, inférieures à celles des MCP de l'élément intérieur 13a, dès lors que le volume est celui d'un moteur thermique où la température dépasse toujours les 150°C (200°C dans l'exemple), quand le moteur fonctionne. Une telle situation sera a priori atypique, d'autant que cette température de 200°C atteindra le volume 9 au moins en partie par conduction, via la paroi thermiquement conductrice, typiquement métallique, du moteur qui entourera aussi le volume 9, et que la paroi 11 pourra doubler ou remplacer à au moins un endroit.

L'exemple suivant de la figure 7 schématise le cas d'une unité 47 de stockage et de restitution ultérieure d'une énergie thermique dans un véhicule. Cette unité 47 est prévue pour être disposé à l'air libre, par exemple prêt du bloc moteur. Il comprend, comme dans les cas précédents, le volume intérieur 9 entouré par la paroi 11 pourvue de la barrière 13b et de l'élément intérieur 13a de stockage thermique, chacun à matériau(x) MCP.

Le fluide de charge correspond au liquide d'un circuit de circulation 48 forcée de liquide, tel qu'un circuit d'huile, communiquant avec le volume intérieur 9.

Dès lors que la température du fluide de charge (90°C dans l'exemple) dans ledit volume 9 est supérieure à ladite plage prédéterminée de températures à maintenir (70/75°C dans l'exemple), la/chaque température de changement d'états, entre liquide et solide, du ou des matériaux MCP de l'élément intérieur 13a de stockage thermique (70 et 90°C dans l'exemple) est supérieure ou égale auxdites températures dans la plage.

Et ces températures différentes de changement d'états des éléments intérieurs 15a,15b sont comprises sensiblement entre la température la plus basse dans ladite plage (70°C dans l'exemple) et la température du fluide de charge dans le volume intérieur 9 (90°C dans l'exemple).

Par ailleurs, dès lors qu'extérieurement (EXT) la paroi 11 est susceptible d'être soumise à des températures tant chaude (45°C) que froide (-50°C) et que le volume 9 est prévu pour recevoir un fluide de moteur (tel de l'huile), les matériaux MCP de la barrière thermique extérieure 13b ont des températures de changement d'états qui ne sont pas supérieures celles de MCP de l'élément intérieur 13a.

Comme dans l'application précédente, dès lors que ladite plage de températures à maintenir est déjà supérieure à la température maximale d'un quelconque environnement extérieur (45/50°C), le cas de l'unité 47 prévoit en outre que les matériaux MCP de la barrière thermique extérieure 13b aient des températures de changement d'état (entre -20/-50°C et 45°C) inférieures à celles des MCP de l'élément intérieur 13a : 70°C et 90°C dans l'exemple.

Et comme dans tous les cas précédents, tant l'élément intérieur 13a que la barrière thermique extérieure 13b comprennent chacun plusieurs matériaux MCP ayant des températures de changement d'état qui croissent de l'intérieur jusqu'à l'extérieur.

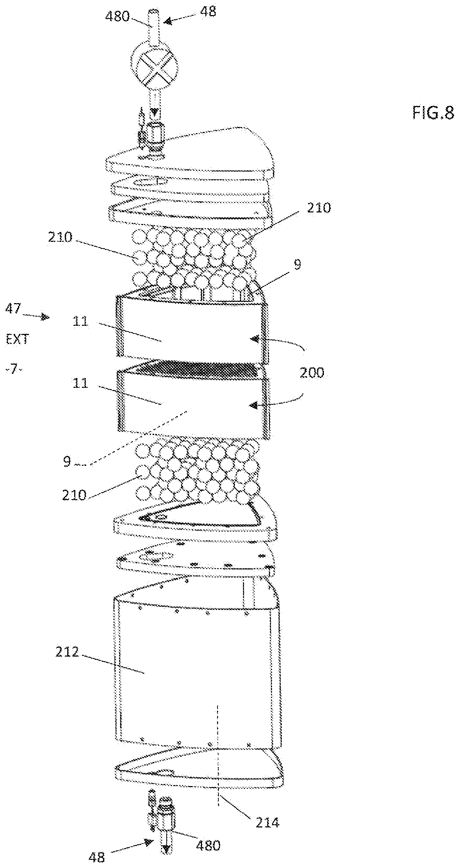

La figure 8 montre maintenant que, dans cette application à une unité 47 de stockage et de restitution ultérieure d'énergie thermique, les parois 11 peuvent être celles de boîtes 200 ouvertes axialement d'un côté (axe 214) et dans chacune desquelles sont disposés des composants MCP 210, ici sous forme de sphères.

Les composants MCP 210 sont en vrac et/ou disposés de façon non-organisés dans le(s) volume(s) 9. Ce ne sont pas des barres. Ce n'est pas une paroi MCP ; il s'agit d'éléments individualisés, chacun en situation d'échange thermique. Il y a ainsi optimisation du temps de séjour (RDT).

Dans ces boîtes 200 circule le fluide 480 issu du circuit 48, tel donc de l'huile, en échange thermique avec les composants MCP 210 et avec les MCP de l'élément intérieur 13a (voir figure 7).

Un manchon 212 entoure les boîtes 200 et des couvercles ferment le tout, axialement ; axe 214.

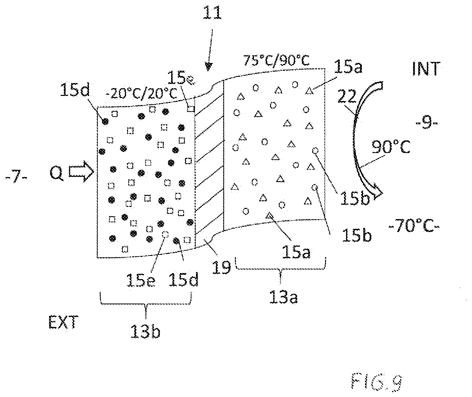

Figure 9, on a schématisé l'utilisation de la paroi 11 pourvue des barrière 13b et élément intérieur 13a de stockage thermique, chacun à matériau(x) MCP, en tant que bouclier protecteur local, autour d'un élément de moteur, tel qu'une culasse.

Dans le volume intérieur 9 circule temporairement le fluide de charge 22, typiquement de l'huile vers 80/100°C, à au moins une température différente de (ici donc plus haute que) celles dans ladite plage prédéterminée de températures estimée à 70°C.

Comme dans d'autres cas ici présentés (par exemple figure 6), le volume intérieur 9 pourra être celui d'un élément distinct, séparé de la paroi 11, comme ici l'élément de moteur concerné. Ainsi, une paroi thermiquement conductrice, comme celle métallique de cet élément, pourrait être interposée entre l'élément intérieur 13a de la paroi 11 et le volume 9. De façon générale, l'échange thermique pourrait donc être indirect entre l'élément intérieur 13a de la paroi 11 et le volume 9.

Dans le cas particulier du bouclier précité, la barrière 13b visera typiquement à protéger contre le froid, l'élément intérieur 13a assurant un rôle de stockeur d'énergie chaude, une protection contre le chaud n'étant pas nécessaire puisque la température à maintenir dans le volume 9 est chaude : estimée à environ 70°C, hors phase de passage du fluide encore plus chaud 22.

On peut dès lors choisir des températures de changement d'états entre -20°C et 20°C dans la barrière 13b et entre 75°C et 90°c dans l'élément intérieur 13a de stockage thermique, avec l'élément isolant thermique 19 interposé entre eux.

Supposons que le moteur fonctionne depuis plusieurs heures. Il est chaud. Tant que la température dans le volume intérieur 9 reste vers 70°C, température nominale de fonctionnement supposée, les matériaux MCP de l'élément intérieur 13a sont solides. Ceux de la barrière 13b sont liquides, du fait de l'apport de l'énergie Q amené à plus de 20°C dans l'environnement extérieur 7 par le fonctionnement du moteur. A l'arrivée du fluide 22, vers 90°C et un peu plus par exemple, il y a stockage d'énergie chaude dans les matériaux MCP de l'élément intérieur 13a qui deviennent liquides.

Quand le moteur va s'arrêter et que le véhicule est parqué la nuit à 5°C, certains (dans l'exemple) des matériaux MCP de la barrière 13b passent solides. Ceci freine ou retarde le refroidissement intérieur de la paroi 11. Il se peut aussi que, plus tard, il y ait déstockage partiel de l'énergie chaude emmagasinée dans les matériaux MCP de l'élément intérieur 13a lorsqu'à moins de 90°C, ils deviendront pour certains solides, préservant ainsi la température nominale visée le plus longtemps et souvent possible dans le volume intérieur 9 : 70°C, dans l'exemple.

Dans tous les cas précités, le mode opératoire pour la gestion thermique du volume 9, ou de l'élément disposé dedans sera le suivant :
- d'abord on déterminera ladite plage de températures à maintenir dans ce volume 9, ou dans ledit élément, comme l'élément 10 stocké de la figure 1 ;
- on va en outre bien sûr réaliser et disposer le dispositif de gestion thermique avec la paroi 11 et ses élément intérieur 13a, barrière thermique extérieure 13b et élément isolant thermique 19 interposé entre le volume intérieur 9 et l'environnement extérieur 7 ;
- ensuite, on placera la barrière thermique 13b en échange thermique avec l'environnement 7 et donc ses possibles températures comprises entre - 50°C et 60°C, tandis que l'élément intérieur 13a sera placé en échange thermique avec le volume 9, ou avec l'élément disposé dedans ;
- puis, à certains moments comme déjà précisé, on apportera temporairement, dans le volume 9, le fluide de charge en échange thermique avec le(s) matériau(x) MCP de l'élément intérieur 13a, pour qu'il stocke alors de l'énergie thermique, ceci donc à au moins une température différente de celles dans ladite plage prédéterminée de températures à maintenir.

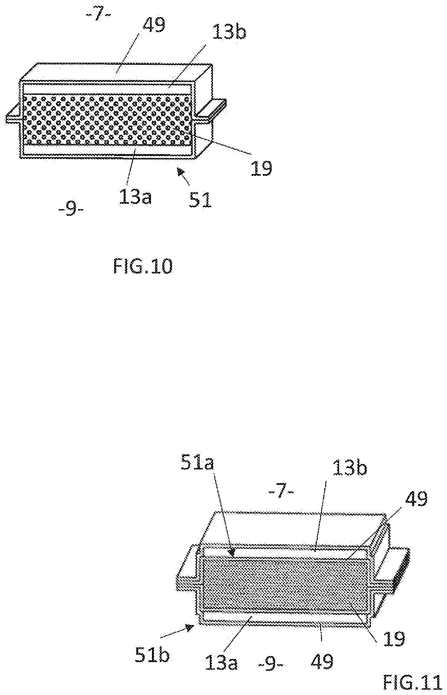

Concernant l'isolant thermique 19, voire l'élément intérieur 13a et/ou la barrière thermique extérieure 13b à matériaux MCP, il sera ou seront favorablement disposé(s) dans une enveloppe sous vide 51 unique (figure 10) ou double (figure 11), pour définir au moins un panneau isolant sous vide, PIV, et donc favoriser l'efficacité thermique de l'isolant et une praticité d'emploi.

Ainsi, la paroi 11 pourrait être réalisée comme suit, ou un tel panneau PIV pourrait être intégré à un bloc en résine ou encore le doubler pour définir cette paroi 11.

Chaque enveloppe sous vide 51 pourra se présenter comme un élément individuel ou une bande comprenant des poches et les portions de liaison. Dans les versions présentées, l'isolant thermique 19, voire les moyens 13a et/ou 13b, sont totalement enfermés dans une ou plusieurs feuilles déformables 49 de l'enveloppe. Les feuilles 49, métalliques ou plastiques, sont scellées ensemble (par exemple soudées) sur toute la périphérie de l'enveloppe 51, pour l'étanchéité et la constitution PIV souhaitée. La(les) feuille(s) de quelques dixièmes de mm à quelques mm d'épaisseur envelopperont, de préférence d'un seul tenant, les poches et les portions de liaison si elles existent. Une solution pourra donc être, pour l'enveloppe 51, de réaliser au moins une première enveloppe intérieure 51a étanche renfermant (chacune) une couche thermiquement isolante (19), le tout étant, avec les couches (15a,15d) à base de MCP, contenu dans une seconde enveloppe extérieure 51b non nécessairement étanche (figure 11).

Ci-après, on fournit deux exemples d'éléments à MCP chauds et à MCP froids, respectivement, pour deux types de batteries par exemple, fonctionnant favorablement entre 25°C et 35°C et entre 45°C et 55°C (le tout à 15% près).

Il pourra en particulier s'agir de MCP encapsulés (typiquement micro-encapsulés) dans une matrice poreuse, à pores ouverts, de préférence de type élastomère, telle qu'à base de silicone, de NBR ou HNBR.

En tant que constitution de l'un et/ou l'autre des élément et barrière 13a,13b, on pourra prévoir une composition de caoutchouc telle que décrite dans EP2690137 ou dans EP2690141, à savoir dans le second cas une composition réticulée à base d'au moins un élastomère silicone « RTV » vulcanisé à température ambiante et comprenant au moins un matériau MCP, ledit au moins un élastomère silicone présentant une viscosité mesurée à 23°C selon la norme ISO 3219 qui est inférieure ou égale à 5000 mPa.s. Dans ce cas, la matrice élastomère sera majoritairement constituée (i.e. selon une quantité supérieure à 50 pce, de préférence supérieure à 75 pce) d'un ou de plusieurs élastomères silicones « RTV ». Le matériau MCP thermique pourra être constitué de n-hexadécane, d'eicosane ou d'un sel de calcium, tous présentant des points de fusion inférieurs à 40° C.

L'autre élément 13b ou 13a pourra être à base de paraffine, d'acide gras eutectique (myristique-caprique) ou de sel hydraté eutectique (chlorure de calcium + potassium).

D'autres possibilités existent, comme un MCP imprégné dans un réseau poreux.

On notera quoi qu'il en soit que tout MCP peut avoir un changement de phase ou d'état à un pic de température prédéterminé ou qui s'établit sur une plage de températures plus ou moins large. Ainsi, avec un MCP pur (tel qu'une paraffine) la température de changement d'état sera constante, tandis qu'elle pourra être non constante avec plusieurs MCP, tels que pour un mélange de paraffines.

De façon générale, les deux cas pouvant être rencontrés dans la présente demande en liaison avec le(s) MCP prévus, toute température de changement d'état de MCP sera ici à considérer dans une plage de 10°C, et typiquement à +/- 5°C.

## Revendications

1. Ensemble comprenant un dispositif de gestion thermique pour favoriser, dans un volume intérieur (9) et/ou vis-à-vis d'un élément (10) qui y est disposé, un maintien d'une température dans une plage prédéterminée, ledit ensemble comprenant :
- ledit volume intérieur (9),
- ledit dispositif disposé autour de ce volume intérieur (9) et placé dans un environnement extérieur (7) soumis à une température non constante, le dispositif comprenant au moins un élément isolant thermique (19) et, de l'intérieur, où est situé ledit volume intérieur et/ou l'élément (1) qui y est disposé, vers l'extérieur où est situé ledit environnement extérieur (7):
-- un élément intérieur (13a) de stockage thermique contenant au moins un matériau à changement de phase ayant une température de changement d'états entre liquide et solide, qui est différente de celles comprises dans ladite plage prédéterminée de températures et/ou qui est sensiblement égale à celle d'un fluide de charge,
-- et une barrière thermique extérieure (13b) contenant au moins un matériau à changement de phase stockant ou cédant de l'énergie thermique par changement d'états entre liquide et solide, et ayant au moins une température de changement d'état comprise entre -50°C et 50°C, pour freiner, par changement d'états, l'action thermique de l'environnement extérieur,
- et des moyens (21,35,4,46,47) d'apport temporaire dudit fluide de charge, à au moins une température différente de celles dans ladite plage prédéterminée de températures, en échange thermique avec ledit au moins un matériau à changement de phase de l'élément intérieur (13a) de stockage thermique, pour qu'il stocke alors de l'énergie thermique,
**caractérisé en ce que** :
- l'élément isolant thermique (19) est interposé entre la barrière thermique (13b) et l'élément intérieur (13a) de stockage thermique, et
- apporté temporairement dans ledit volume intérieur (9) par les moyens (21,35,4,46,47) d'apport temporaire, le fluide de charge y est en échange thermique avec ledit au moins un matériau à changement de phase.

2. Ensemble selon la revendication 1, où la ou l'une au moins des températures de changement d'états du ou des matériaux à changement de phase de l'élément intérieur (13a) de stockage thermique est:
- soit supérieure aux températures dans ladite plage prédéterminée de températures à maintenir, si la température du fluide de charge dans ledit volume intérieur (9) est supérieure à ladite plage prédéterminée de températures à maintenir,
- soit inférieure aux températures dans ladite plage prédéterminée de températures à maintenir, si la température du fluide de charge dans ledit volume intérieur est inférieure à ladite plage prédéterminée de températures à maintenir.

3. Ensemble selon l'une des revendications précédentes, où l'élément intérieur (13a) de stockage thermique et/ou la barrière thermique extérieure (13b) contient plusieurs dits matériaux à changement de phase ayant des températures de changement d'états, entre liquide et solide, différentes.

4. Ensemble selon l'une des revendications 1 à 3, où ledit élément intérieur (13a) de stockage thermique contient plusieurs matériaux à changement de phase:
- ayant des températures de changement d'états, entre liquide et solide, différentes comprises sensiblement entre la température du fluide de charge dans ledit volume intérieur et la température la plus haute dans ladite plage prédéterminée de températures, si la température du fluide de charge dans ledit volume intérieur (9) est inférieure à ladite plage prédéterminée de températures à maintenir,
- ou ayant des températures de changement d'états, entre liquide et solide différentes, comprises sensiblement entre la température la plus basse dans ladite plage prédéterminée de températures et la température du fluide de charge dans ledit volume intérieur (9), si la température du fluide de charge dans ledit volume intérieur est supérieure à ladite plage prédéterminée de températures à maintenir.

5. Ensemble selon l'une des revendications 1 à 3, où :
- ledit élément intérieur (13a) de stockage thermique contient plusieurs matériaux à changement de phase ayant des températures de changement d'états, entre liquide et solide, différentes comprises sensiblement entre la température du fluide de charge dans ledit volume intérieur (9) et la température la plus haute dans ladite plage prédéterminée de températures, si la température du fluide de charge dans ledit volume intérieur est inférieure à ladite plage prédéterminée de températures à maintenir,
- la barrière thermique extérieure (13b) contient plusieurs matériaux à changement de phase ayant des températures de changement d'états supérieures ou égales à celles des matériaux à changement de phase dudit élément intérieur (13a) de stockage thermique.

6. Ensemble selon l'une des revendications 1 à 3, où :
- ledit élément intérieur (13a) de stockage thermique contient plusieurs matériaux à changement de phase ayant des températures de changement d'état différentes, comprises, dans une première plage de températures relativement basses, entre une température basse et une première température (T1) plus élevée,
- et que la barrière thermique extérieure (13b) contienne plusieurs matériaux à changement de phase ayant des températures de changement d'état différentes comprises, dans une seconde plage de températures supérieure à la première, entre une seconde température (T2) et une température haute plus élevée,
- et lesdites première et seconde températures (T1,T2) sont identiques, à 5°C près.

7. Ensemble selon l'une des revendications 1 à 3, où l'un au moins des élément intérieur (13a) de stockage thermique et barrière thermique extérieure (13b) comprend plusieurs couches de matériaux contenant chacune un matériau à changement de phase, lesdits matériaux à changement de phase ayant des températures de changement d'état différentes les unes des autres.

8. Ensemble selon l'une des revendications précédentes, où l'un au moins des élément intérieur (13a) de stockage thermique et barrière thermique extérieure (13b) comprend plusieurs matériaux à changement de phase ayant des températures de changement d'état différentes dispersés dans une matrice.

9. Ensemble selon l'une des revendications précédentes destiné à une préservation de froid, où les moyens d'apport du fluide de charge comprennent un groupe de froid (21).

10. Véhicule comprenant ledit ensemble selon l'une des revendications 1 à 9, où :
- le volume intérieur (9) comprend un habitacle du véhicule ou une zone annexe de stockage du véhicule,
- et les moyens d'apport du fluide de charge comprennent des moyens (35) de conditionnement d'air d'où sort ledit fluide.

11. Partie d'un bâtiment construit, situé dans un environnement extérieur comprenant ledit ensemble selon l'une des revendications 1 à 9, et où :
- au moins une pièce correspond audit volume intérieur (9) entouré par une paroi (11) pourvue dudit dispositif de gestion thermique,
- et les moyens d'apport du fluide de charge comprennent des moyens, tels que des moyens d'aération, tels que portes et fenêtres, pour créer au moins une convection naturelle dans ledit volume intérieur (9) au contact de l'élément intérieur (13a) de stockage thermique.

12. Unité de stockage et de restitution ultérieure d'une énergie thermique dans un système embarqué, ladite unité comprenant l'ensemble selon l'une des revendications 1 à 9, où le fluide de charge correspond au liquide d'un circuit de circulation forcée de liquide, tel qu'un circuit d'huile, communiquant avec ledit volume intérieur (9).

13. Véhicule comprenant ledit ensemble selon l'une des revendications 1 à 9, où :
- le volume intérieur (9) correspond à une partie interne d'un moteur de déplacement du véhicule dont une paroi est au moins localement pourvue dudit dispositif de gestion thermique,
- et les moyens d'apport du fluide de charge comprennent des organes (46) fonctionnels du moteur disposés dans ladite partie interne d'un moteur, tels des pistons ou un vilebrequin.

14. Procédé de gestion thermique d'un volume intérieur, ou d'un élément disposé dans ledit volume intérieur, entouré par un dispositif de gestion thermique, dans lequel :
- on réalise et dispose le dispositif de gestion thermique avec au moins un élément isolant thermique (19) et, de l'intérieur, où est situé ledit volume intérieur et/ou l'élément (10) qui y est disposé, vers l'extérieur :
-- un élément intérieur (13a) de stockage thermique contenant au moins un matériau à changement de phase ,
-- et une barrière thermique extérieure (13b) contenant au moins un matériau à changement de phase stockant ou cédant de l'énergie thermique par changement d'états entre liquide et solide, et ayant au moins une température de changement d'état comprise entre -50°C et 50°C, pour freiner, par changement d'états, l'action thermique de l'environnement extérieur, l'élément isolant thermique (19) étant interposé entre la barrière thermique (13b) et l'élément intérieur (13a) de stockage thermique,
- à certains moments, on apporte temporairement un fluide de charge en échange thermique avec ledit au moins un matériau à changement de phase, **caractérisé en ce que** :
- on détermine une plage prédéterminée de températures du volume intérieur (9), ou de l'élément disposé dedans, à maintenir, et on sélectionne le matériau à changement de phase pour qu'il présente une température de changement d'états entre liquide et solide :
-- qui est différente de celles comprises dans ladite plage prédéterminée de températures, et/ou
-- qui est sensiblement égale à celle du fluide de charge,
- on place la barrière thermique extérieure du dispositif en échange thermique avec ledit environnement extérieur (7) ayant une température comprise entre -50°C et 60°C, et on laisse alors le(s) matériau(x) MCP stocker ou céder de l'énergie thermique en fonction de ladite température, et on place par ailleurs ledit au moins un matériau MCP de l'élément intérieur (13a) de stockage thermique en échange thermique avec le volume intérieur (9), ou avec l'élément disposé dedans,
- et, auxdits certains moments, on apporte temporairement ledit fluide de charge dans le volume intérieur (9), à au moins une température différente de celles dans ladite plage prédéterminée de températures, en échange thermique avec ledit au moins un matériau à changement de phase, pour qu'il stocke alors de l'énergie thermique.

## Patentansprüche

1. Anordnung, enthaltend eine Wärmemanagementvorrichtung, um in einem Innenraum (9) und/oder in Bezug auf ein darin angeordnetes Element (10) eine Aufrechterhaltung einer Temperatur innerhalb eines vorbestimmten Bereichs zu fördern, wobei die Anordnung enthält:
- den Innenraum (9),
- die Vorrichtung, die um diesen Innenraum (1) herum angeordnet und in einer äußeren Umgebung (7) vorgesehen ist, die einer nicht konstanten Temperatur ausgesetzt ist, wobei die Vorrichtung mindestens ein thermisch isolierendes Element (19) aufweist und
von innen, wo sich der Innenraum und/oder das darin angeordnete Element (1) befindet, nach außen, wo sich die äußere Umgebung (7) befindet,
-- ein Innenelement zur thermischen Speicherung (13a) aufweist, das mindestens ein Phasenwechselmaterial mit einer Zustandsänderungstemperatur zwischen flüssigem und festem Zustand enthält, die sich von denjenigen innerhalb des vorbestimmten Temperaturbereichs unterscheidet und/oder die im Wesentlichen gleich der eines Ladefluids ist,
-- und eine äußere thermische Sperre (13b) aufweist, die mindestens ein Phasenwechselmaterial enthält, das thermische Energie durch Zustandsänderung zwischen flüssig und fest speichert bzw. abgibt und mindestens eine Zustandsänderungstemperatur im Bereich zwischen -50°C und 50°C aufweist, um durch Zustandsänderung die thermische Einwirkung der äußeren Umgebung zu hemmen,
- sowie Mittel (21, 35, 4, 46, 47) zur vorübergehenden Zufuhr des Ladefluids bei mindestens einer Temperatur, die sich von denen in dem vorbestimmten Temperaturbereich unterscheidet, in Wärmeaustausch mit dem mindestens einen Phasenwechselmaterial des Innenelements zur thermischen Speicherung (13a), damit dieses dann die thermische Energie speichert,
**dadurch gekennzeichnet, dass**
- das thermisch isolierende Element (19) zwischen der thermischen Sperre (13b) und dem Innenelement zur thermischen Speicherung (13a) angeordnet ist, und
- das über die Mittel (21, 35, 4, 46, 47) zur vorübergehenden Zufuhr vorübergehend in den Innenraum (9) zugeführte Ladefluid darin in Wärmeaustusch mit dem zumindest einen Phasenwechselmaterial steht.

2. Anordnung nach Anspruch 1, wobei die bzw. mindestens eine der Zustandsänderungstemperaturen des bzw. der Phasenwechselmaterialien des Innenelements zur thermischen Speicherung (13a)
- entweder höher als die Temperaturen in dem vorbestimmten aufrechtzuerhaltenden Temperaturbereich ist, wenn die Temperatur des Ladefluids in dem Innenraum (9) höher ist als der vorbestimmte aufrechtzuerhaltende Temperaturbereich,
- oder niedriger als die Temperaturen in dem vorbestimmten aufrechtzuerhaltenden Temperaturbereich ist, wenn die Temperatur des Ladefluids in dem Innenraum niedriger ist als der vorbestimmte aufrechtzuerhaltende Temperaturbereich.

3. Anordnung nach einem der vorhergehenden Ansprüche, wobei das Innenelement zur thermischen Speicherung (13a) und/oder die äußere thermische Sperre (13b) mehrere der Phasenwechselmaterialien mit unterschiedlichen Zustandsänderungstemperaturen zwischen flüssigem und festem Zustand enthält.

4. Anordnung nach einem der Ansprüche 1 bis 3, wobei das Innenelement zur thermischen Speicherung (13a) mehrere Phasenwechselmaterialien enthält, die
- unterschiedliche Zustandsänderungstemperaturen zwischen flüssigem und festem Zustand haben, die im Wesentlichen zwischen der Temperatur des Ladefluids in dem Innenraum und der höchsten Temperatur in dem vorbestimmten Temperaturbereich liegen, wenn die Temperatur des Ladefluids in dem Innenraum (9) niedriger ist als der vorbestimmte aufrechtzuerhaltende Temperaturbereich,
- oder unterschiedliche Zustandsänderungstemperaturen zwischen flüssigem und festem Zustand haben, die im Wesentlichen zwischen der niedrigsten Temperatur in dem vorbestimmten Temperaturbereich und der Temperatur des Ladefluids in dem Innenraum (9) liegen, wenn die Temperatur des Ladefluids in dem Innenraum höher ist als der vorbestimmte aufrechtzuerhaltende Temperaturbereich.

5. Anordnung nach einem der Ansprüche 1 bis 3, wobei
- das Innenelement zur thermischen Speicherung (13a) mehrere Phasenwechselmaterialien enthält, die unterschiedliche Zustandsänderungstemperaturen zwischen flüssigem und festem Zustand haben, die im Wesentlichen zwischen der Temperatur des Ladefluids in dem Innenraum (9) und der höchsten Temperatur in dem vorbestimmten Temperaturbereich liegen, wenn die Temperatur des Ladefluids in dem Innenraum niedriger ist als der vorbestimmte aufrechtzuerhaltende Temperaturbereich,
- die äußere thermische Sperre (13b) mehrere Phasenwechselmaterialien enthält, die Zustandsänderungstemperaturen haben, die höher oder gleich denjenigen der Phasenwechselmaterialien des Innenelements zur thermischen Speicherung (13a) sind.

6. Anordnung nach einem der Ansprüche 1 bis 3, wobei
- das Innenelement zur thermischen Speicherung (13a) mehrere Phasenwechselmaterialien mit unterschiedlichen Zustandsänderungstemperaturen enthält, die in einem ersten relativ niedrigen Temperaturbereich zwischen einer niedrigen Temperatur und einer ersten erhöhten Temperatur (T1) liegen,
- und die äußere thermische Sperre (13b) mehrere Phasenwechselmaterialien mit unterschiedlichen Zustandsänderungstemperaturen enthält, die in einem zweiten Temperaturbereich, der höher als der erste ist, zwischen einer zweiten Temperatur (T2) und einer erhöhten hohen Temperatur liegen,
- und die erste und zweite Temperatur (T1, T2) auf 5°C genau identisch sind.

7. Anordnung nach einem der Ansprüche 1 bis 3, wobei mindestens eines aus Innenelement zur thermischen Speicherung (13a) und äußerer thermischer Sperre (13b) mehrere Materialschichten aufweist, die jeweils ein Phasenwechselmaterial enthalten, wobei die Phasenwechselmaterialien voneinander verschiedene Zustandsänderungstemperaturen haben.

8. Anordnung nach einem der vorhergehenden Ansprüche, wobei mindestens eines aus Innenelement zur thermischen Speicherung (13a) und äußerer thermischer Sperre (13b) mehrere Phasenwechselmaterialien mit unterschiedlichen Zustandsänderungstemperaturen enthält, die in einer Matrix dispergiert sind.

9. Anordnung nach einem der vorhergehenden Ansprüche zur Aufrechterhaltung von Kälte, wobei die Mittel zur Zufuhr des Ladefluids ein Kühlaggregat (21) aufweisen.

10. Fahrzeug mit der Anordnung nach einem der Ansprüche 1 bis 9, wobei
- der Innenraum (9) einen Fahrgastraum des Fahrzeugs oder einen angegliederten Stauraum des Fahrzeugs umfasst,
- und die Mittel zur Zufuhr des Ladefluids eine Luftklimatisierungseinrichtung (35) enthalten, aus der das Fluid austritt.

11. Bauteil eines errichteten Gebäudes, das sich in einer äußeren Umgebung befindet, enthaltend die Anordnung nach einem der Ansprüche 1 bis 9, wobei
- mindestens ein Teil dem Innenraum (9) entspricht, der von einer Wand (11) umgeben ist, die mit der Wärmemanagementvorrichtung versehen ist,
- und die Mittel zum Zufuhr des Ladefluids Mittel, wie etwa Belüftungsmittel, wie Türen und Fenster, umfassen, um zumindest eine natürliche Konvektion in dem Innenraum (9) in Kontakt mit dem Innenelement zur thermischen Speicherung (13a) zu erzeugen.

12. Einheit zur Speicherung und anschließenden Abgabe von thermischer Energie in einem Bordsystem, wobei die Einheit die Anordnung nach einem der Ansprüche 1 bis 9 enthält, wobei das Ladefluid der Flüssigkeit eines erzwungenen Flüssigkeitskreislaufs, wie eines Ölkreislaufs, entspricht, der mit dem Innenraum (9) in Verbindung steht.

13. Fahrzeug mit der Anordnung nach einem der Ansprüche 1 bis 9, wobei
- der Innenraum (9) einem Innenbauteil eines Motors zum Fortbewegen des Fahrzeugs entspricht, dessen eine Wand zumindest bereichsweise mit der Wärmemanagementvorrichtung versehen ist,
- und die Mittel zur Zufuhr des Ladefluids Funktionselemente (46) des Motors umfassen, die in dem Innenbauteil eines Motors angeordnet sind, wie beispielsweise Kolben oder eine Kurbelwelle.

14. Verfahren zum Wärmemanagement eines Innenraums oder eines in diesem Innenraum angeordneten Elements, das von einer Wärmemanagementvorrichtung umgeben ist, wobei
- die Wärmemanagementvorrichtung bereitgestellt und angeordnet wird, die mindestens ein thermisch isolierendes Element (19) enthält,
sowie von innen, wo sich der Innenraum und/oder das darin angeordnete Element (10) befindet, nach außen
-- ein Innenelement zur thermischen Speicherung (13a), das mindestens ein Phasenwechselmaterial enthält,
-- und eine äußere thermische Sperre (13b), die mindestens ein Phasenwechselmaterial enthält, das thermische Energie durch Zustandsänderung zwischen flüssig und fest speichert bzw. abgibt und mindestens eine Zustandsänderungstemperatur zwischen -50°C und 50°C aufweist, um durch Zustandsänderung die thermische Einwirkung der äußeren Umgebung zu hemmen, wobei das thermisch isolierende Element (19) zwischen der thermischen Sperre (13b) und dem Innenelement zur thermischen Speicherung (13a) eingefügt ist,
- zu bestimmten Zeitpunkten ein Ladefluid vorübergehend in Wärmeaustausch mit dem zumindest einen Phasenwechselmaterial gebracht wird,
**dadurch gekennzeichnet, dass**
- ein vorbestimmter aufrechtzuerhaltender Temperaturbereich des Innenraums (9) bzw. des darin angeordneten Elements festgelegt wird, und das Phasenwechselmaterial so ausgewählt wird, dass es eine Zustandsänderungstemperatur zwischen flüssigem und festem Zustand aufweist,
-- die sich von denen unterscheidet, die in dem vorbestimmten Temperaturbereich liegen, und/oder
-- im Wesentlichen gleich derjenigen des Ladefluids ist,
- die äußere thermische Sperre der Vorrichtung in Wärmeaustausch mit der äußeren Umgebung (7), die eine Temperatur zwischen -50°C und 60°C hat, gebracht wird und das bzw. die PCM-Materialien dann in Abhängigkeit von der Temperatur thermische Energie speichern bzw. abgeben können, und das mindestens eine PCM-Material des Innenelements zur thermischen Speicherung (13a) ferner in Wärmeaustausch mit dem Innenraum (9) bzw. mit dem darin angeordneten Element gebracht wird,
- und zu den bestimmten Zeitpunkten das Ladefluid vorübergehend in den Innenraum (9) bei zumindest einer Temperatur, die sich von denjenigen in dem vorbestimmten Temperaturbereich unterscheidet, in Wärmeaustausch mit dem zumindest einen Phasenwechselmaterial gebracht wird, damit dieses dann die thermische Energie speichert.

## Claims

1. An assembly comprising a thermal management device for promoting the maintenance of a temperature within a predetermined range, in an inner space (9) and/or vis-à-vis an element (10) disposed therein, said assembly comprising:
- said inner space (9),
- said device arranged around the inner space (1) and placed in an outdoor environment (7) exposed to a non-constant temperature, the device comprising at least one thermal insulating element (19) and, from inside, where is located said inner space and/or the element (1) disposed therein, towards outside where said outdoor environment (7) is located:
-- an inner thermal-storage element (13a) containing at least one phase change material having a phase transition temperature between liquid and solid, which is different from temperatures included in said predetermined temperature range and/or substantially equal to the temperature of a charge fluid,
-- and an outer thermal barrier (13b) containing at least one phase change material which stores or releases thermal energy by phase transitions between liquid and solid, and which has at least a phase transition temperature of between -50°C and 50°C, in order to slow down, by phase transitions, the thermal action of the outdoor environment,
- and fluid supplying means (21,35,4,46,47) for temporarily supplying said charge fluid, at least at a temperature different from temperatures in said predetermined temperature range, in thermal transfer with said at least one phase change material of the inner thermal-storage element (13a) such that it stores thermal energy,
being **characterized in that**:
- the thermal insulating element (19) is interposed between the thermal barrier (13b) and the inner thermal-storage element (13a), and
- temporarily supplied in said inner space (9) by the fluid supplying means (21,35,4,46,47), the charge fluid is in thermal exchange therein with said at least one phase change material.

2. The assembly according to claim 1, wherein the or at least one of the phase transition temperatures of the phase change material(s) of the inner element (13a) of thermal storage is:
- either higher than the temperatures in said predetermined temperature range to be maintained, if the temperature of the charge fluid in said inner space (9) is higher than said predetermined temperature range to be maintained,
- or lower than the temperatures in said predetermined temperature range to be maintained, if the temperature of the charge fluid in said inner space is lower than said predetermined temperature range to be maintained.

3. The assembly according to one of the preceding claims, wherein the inner thermal-storage element (13a) and/or the outer thermal barrier (13b) contains several of said phase change materials having different phase transition temperatures, between liquid and solid.

4. The assembly according to one of Claims 1 to 3, wherein said inner thermal-storage element (13a) contains several phase change materials:
- having different phase transition temperatures, between liquid and solid, ranging substantially between the temperature of the charge fluid in said inner space and the highest temperature in said predetermined temperature range, if the temperature of the charge fluid in said inner space (9) is less than said predetermined temperature range to be maintained;
- or having different liquid and solid phase transition temperatures ranging substantially between the lowest temperature in said predetermined temperature range and the temperature of the charge fluid in said inner space, if the temperature of the charge fluid in said inner space is higher than said predetermined temperature range to be maintained,

5. The assembly according to one of Claims 1 to 3 in which:
- said inner thermal-storage element (13a) contains a plurality of phase change materials having different phase transition temperatures, between liquid and solid, comprised between substantially the temperature of the charge fluid in said inner space (9) and the highest temperature in said predetermined temperature range, if the temperature of the charge fluid in said inner space is lower than said predetermined temperature range to be maintained,
- the outer thermal barrier (13b) contains a plurality of phase change materials having phase transition temperatures higher than or equal to that of the phase change materials of said inner thermal-storage element (13a).

6. The assembly according to one of Claims 1 to 3 in which:
- said inner thermal-storage element (13a) contain a plurality of phase change materials having different phase transition temperatures, ranging, within a first temperature range which is relatively low, between a low temperature and a first temperature (T1) which is warmer than it is;
- and the outer thermal barrier (13b) contains a plurality of phase change materials having different phase transition temperatures, ranging, within a second temperature range higher than the first temperature range, between a second temperature (T2) and a high temperature which is warmer than it is;
- and said first and second temperatures (T1, T2) are identical, at nearly 5°C.

7. The assembly according to one of Claims 1 to 3, wherein at least one of the inner thermal-storage element (13a) and outer thermal barrier (13b) comprises several layers of materials each containing a phase change material, said phase change materials having phase transition temperatures different from each other.

8. The assembly according to one of the preceding claims, wherein at least one of the inner thermal-storage element (13a) and outer thermal barrier (13b) comprises a plurality of phase change materials having different phase transition temperatures dispersed in a matrix.

9. The assembly according to one of the preceding claims for cold preservation, wherein the fluid supplying means comprise a cooling unit (21).

10. A vehicle comprising said assembly according to one of Claims 1 to 9, wherein:
- the inner space (9) comprises a passenger compartment of the vehicle or an adjoining storage zone of the vehicle,
- and the fluid supplying means comprise air conditioning means (35) from which said fluid flows.

11. A part of a constructed building, located in an outdoor environment comprising said assembly according to one of Claims 1 to 9, and wherein:
- at least one room thereof corresponds to said inner space (9), surrounded by a wall (11) provided with said thermal management device, and
- the fluid supplying means comprise means, such as aeration means, such as doors and windows, to create at least one natural convection in said inner space (9) in contact with the inner thermal-storage element (13a).

12. A unit for storing and subsequently releasing thermal energy, on an on-board system, said unit comprising the assembly according to one of Claims 1 to 9, wherein the charge fluid corresponds to the liquid of a forced liquid circulation circuit, such as an oil circuit, communicating with said inner space (9).

13. A vehicle comprising said assembly according to one of Claims 1 to 9, wherein:
- the inner space (9) corresponds to an inner part of an engine adapted to move the vehicle of which a wall is at least locally provided with said thermal management device,
- and the fluid supplying means comprise engine functional members (46) of disposed in said inner part of the engine, such as pistons or a crankshaft.

14. A method of thermal management of an inner space, or an element disposed in said inner space, surrounded by a thermal management device, **characterized in that**:
- the thermal management device is made and disposed with at least one thermal insulating element (19) and with, from inside, where said inner space and/or the element (10) which is disposed therein, is located towards outside:
-- an inner thermal-storage element (13a) containing at least one phase change material,
-- and an outer thermal barrier (13b) containing at least one phase change material storing or transferring thermal energy by phase transitions between liquid and solid, and having at least a phase transition temperature of between -50°C C and 50°C, in order to slow down, by phase transitions, the thermal action of the outdoor environment, the thermal insulating element (19) being interposed between the thermal barrier (13b) and the inner thermal-storage element (13a),
- at certain times, said charge fluid is temporarily brought in thermal transfer with said at least one phase change material,
**characterized in that**:
- a predetermined temperature range of the inner space (9), or of the element disposed therein, to be maintained is determined, and the phase change material is selected so that it has a phase transition temperature between liquid and solid:
-- which is different from those included in said predetermined temperature range, and/or
-- which is substantially equal to that of a charge fluid,
- the outer thermal barrier of the device is disposed in thermal transfer with said outdoor environment (7) having a temperature of between -50°C and 60°C, and the phase change material(s) is/are then left to store or return thermal energy depending on said temperature, and further said at least one phase change material of the inner thermal-storage element (13a) is placed in thermal transfer with the inner space (1), or with the element disposed inside,
- and, at said at certain times, said charge fluid is temporarily brought into the inner space (9) at least a temperature different from that in said predetermined temperature range, in thermal transfer with said at least one phase change material, so that it then stores thermal energy.
